# EUROPÄISCHE PATENTSCHRIFT

(11) **EP 1 454 814 B1**
(45) Veröffentlichungstag und Bekanntmachung des Hinweises auf die Patenterteilung: **14.06.2006**
(21) Anmeldenummer: 04000829.4
(22) Anmeldetag: 16.01.2004
(51) Int. Cl.: B62D 6/02, B62D 5/06

(54) **Lenkhilfevorrichtung für ein Fahrzeug**
Power steering device for a vehicle
Dispositif de direction assistée pour véhicule

(30) Priorität: 07.03.2003 DE 10309961
(43) Veröffentlichungstag der Anmeldung: 08.09.2004
(73) Patentinhaber: AUDI AG, 85045 Ingolstadt (DE)
(72) Erfinder: Hofmeier, Eduard, 85134 Stammham (DE)
(74) Vertreter: Asch, Konrad

(56) Entgegenhaltungen:
- EP-A- 0 302 594
- DE-A1- 19 644 093
- US-A- 5 769 121

## Beschreibung

Die Erfindung betrifft eine Lenkhilfevorrichtung gemäß der im Oberbegriff des Anspruchs 1 angegebenen Art.

Eine Lenkhilfevorrichtung dieser Art ist beim Personenkraftwagenbau eingeführt und als Lenkhilfe für die Lenkung unter der Bezeichnung Servotroniclenkung bekannt.

Die bekannte Lenkhilfevorrichtung weist eine Lenkhilfepumpe mit einem sie umgehenden Bypass, in dem ein Druckbegrenzungsventil angeordnet ist, und ein Lenkventil auf, das dann, wenn die Lenkung und die Lenkhilfevorrichtung maximal ausgelenkt sind und sich am sogenannten Lenkanschlag befinden, geschlossen ist und nur geringe Leckmengen passieren lässt. In diesem Zustand wird das Ö1 fortlaufend im inneren Pumpenkreislauf durch den Bypass gefördert, was mangels hinreichendem Ölaustausch zu einer erhöhten Erwärmung und als weitere Folge zum Pumpenausfall führt. Des Weiteren werden am Rückschlagventil durch den geringen Ölstrom (Lecköl) Flattergeräusche verursacht.

Der Erfindung liegt die Aufgabe zugrunde, bei einer Lenkhilfevorrichtung gemäß der im Oberbegriff des Anspruchs 1 angegebenen Art unter Vermeidung der genannten Nachteile die Gefahr einer erhöhten Erwärmung und/oder die Gefahr von erhöhten Laufgeräuschen zu vermeiden oder wenigstens zu vermindern.

Diese Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass die Drosselvorrichtung dazu ausgenutzt werden kann, durch Freigabe eines Teilquerschnitts zu gewährleisten, dass ein Teilstrom des Fluids die Drosselvorrichtung im normalen Kreislauf passieren kann und dadurch eine schädliche Temperaturerhöhung und/oder die erhöhten Geräusche vermieden oder wenigstens vermindert werden kann bzw. können.

Bei der erfindungsgemäßen Lenkhilfevorrichtung gibt die Drosselvorrichtung im Anfangsbereich der Fahrgeschwindigkeit und dann, wenn die Lenkhilfevorrichtung sich in einer Stellung befindet, die einem Grenzbereich einer maximalen Lenkbewegung des Lenkhilfeelements bzw. der Lenkung entspricht, einen Teilquerschnitt der Druckleitung frei.

Hierdurch wird ein Teilquerschnitt des normalen Fluidkreislaufs freigegeben, wobei ein Teilstrom des Druckfluids im normalen Kreislauf strömen kann und gleichzeitig ein verringerter, jedoch die Funktion des Lenkventils gewährleistender Druck in der Druckleitung aufrechterhalten wird. Durch den verringerten Druck werden erhöhte Geräusche wenigstens vermindert. Durch den Teilstrom im normalen Kreislauf wird aufgrund des Fluidaustausches und verbesserter Kühlung eine erhöhte Erwärmung des Fluids wenigstens vermindert.

Wenn im Bereich zwischen den Grenzbereichen die Lenkhilfevorrichtung unbeeinflusst bleiben soll, ist es vorteilhaft, den Teilquerschnitt beim Auslenken nur in den Grenzbereichen freizugeben und beim Zurücklenken im Bereich zwischen den Grenzbereichen zu schließen und erst mit zunehmender Fahrgeschwindigkeit zunehmend zu öffnen.

Es lassen sich einfache Bauweisen guter und bewährter Funktion erreichen, wenn die Drosselvorrichtung durch eine verstellbare Drossel oder durch ein Elektromagnetventil gebildet ist. Dabei ergibt sich bei Gewährleistung einer einfachen Bauweise auch eine einfach steuerbare Funktion, wenn ein Ventilschieber des Elektromagnetventils durch eine Feder in seine Offenstellung vorgespannt ist und durch die Kraft eines Elektromagnets gegen die Kraft der Feder in die Richtung auf seine Schließstellung bewegbar ist.

Die gleichen Vorteile lassen sich auch erzielen, wenn zum Einstellen des Teilquerschnitts die Steuervorrichtung die Stromstärke des das Elektromagnetventil beaufschlagenden Stromes senkt und beim Verlassen des betreffenden Grenzbereichs beim Zurücklenken wieder erhöht.

Zum Feststellen des richtigen Bewegungszeitpunktes zum Öffnen des Teilquerschnitts ist es vorteilhaft, einen Sensor vorzusehen, der bei einer Bewegung des Lenkhilfeelements oder eines damit verbundenen Bauteils in eine dem jeweiligen Grenzbereich entsprechende Stellung der Steuervorrichtung ein Signal zum Freigeben des Teilquerschnitts der Druckleitung an die Steuervorrichtung übermittelt.

Um die Strömung des Fluids möglichst wenig zu stören oder zu beeinträchtigen ist es vorteilhaft, den Sensor so anzuordnen, dass er das Signal übermittelt, bevor das Lenkhilfeelement bzw. das damit verbundene Bauteil die Lenkbewegungsgrenze erreicht.

Dabei ergibt sich eine störungsunanfällige und deshalb sichere Funktion, wenn die Bewegungslänge der Grenzbereiche jeweils etwa 1/40 bis 1/10, insbesondere etwa 1/30 bis 1/20, der Bewegungslänge des gesamten Lenkbewegungsbereichs beträgt.

Die gleichen Vorteile lassen sich erzielen, bei einer Lenkung mit einem Lenkrad die Bewegungslänge der Grenzbereiche einem Drehwinkel des Lenkrads von etwa 10° bis etwa 40°, insbesondere von etwa 20° bis etwa 30°, entspricht.

Für die erfindungsgemäße Lenkhilfevorrichtung eignet sich eine Steuervorrichtung besonders gut, die ein elektronisches Steuerprogramm aufweist. Hierdurch ist es bei Gewährleistung eines geringen mechanischen Aufwandes möglich, die erfindungsgemäße Funktion der Steuervorrichtung bzw. der Drosselvorrichtung durch Schaffung eines bestimmten Programms zu erreichen oder die bekannte Lenkhilfevorrichtung durch eine Änderung des Programms umzurüsten.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel. Es zeigt:
- Fig. 1: eine schematische Darstellung einer erfindungsgemäßen Lenkhilfevorrichtung;
- Fig. 2: einen axialen Schnitt durch eine Drosselvorrichtung;
- Fig. 3: eine schematische Darstellung eines linken Abschnitts einer Lenkung mit einem Lenkhilfemotor; und
- Fig. 4: ein Funktionsschaubild.

Die in ihrer Gesamtheit mit 10 bezeichnete Lenkhilfevorrichtung weist eine Lenkhilfepumpe 12 auf, z. B. eine Flügelzellenpumpe, von der sich eine Druckleitung 14 erstreckt, deren Druck durch eine Drosselvorrichtung 16 steuerbar ist. Beim Ausführungsbeispiel wird die Drosselvorrichtung 16 durch eine verstellbare Drossel 16a gebildet, die in der Druckleitung 14 angeordnet ist. Stromauf von der Drosselvorrichtung 16 zweigt eine Druckzweigleitung 14a von der Druckleitung 14 ab, die sich zu einem Lenkventil 18 erstreckt. Das Lenkventil 18 ist durch wenigsten eine Steuerleitung 20 mit einem Lenkhilfemotor 22 verbunden, der ein Lenkhilfeelement 22a aufweist. Das Lenkhilfeelement 22a ist mit einem nicht dargestellten korrespondierenden Verbindungselement einer Lenkung des Fahrzeugs verbindbar bzw. verbunden.

Beim Ausführungsbeispiel wird der Lenkhilfemotor 22 durch einen Lenkzylinder gebildet, dessen beiderseits eines Kolbens vorhandenen Druckräume jeweils durch eine Steuerleitung 20, 20a mit dem Lenkventil 18 verbunden sind und davon versorgt werden.

Zum Steuern der Drosselvorrichtung 16 ist eine elektronische Steuervorrichtung 24 vorgesehen, die durch eine Steuerleitung 26 mit der Drosselvorrichtung 16 verbunden ist und die Drosselvorrichtung 16 in Abhängigkeit von der Fahrgeschwindigkeit des Fahrzeugs und der Stellung seiner Lenkung nach einem elektronischen Steuerprogramm steuert. Beim Ausführungsbeispiel sind hierzu ein Geschwindigkeitsmesser 28 zum Messen der Geschwindigkeit des Fahrzeugs und ein Lenkbewegungssensor 30 zum Ermitteln bestimmter Lenkbewegungen der Lenkung vorgesehen. Die Signale werden jeweils durch eine Signalleitung 32, 34 dem Steuergerät 24 übermittelt.

Stromab von der Drosselvorrichtung 16 erstreckt sich eine Rückführleitung 36, von der eine Zweigleitung 38 abzweigen kann. Die Zweigleitung 38 erstreckt sich zu einer nicht dargestellten Rückwirkeinheit, die dem Lenkventil 18 zugeordnet ist, bei dem es sich um ein sogenanntes und im vorliegenden Fachbereich bekanntes Servotronicventil handelt.

Beim Ausführungsbeispiel ist die Pumpe 12 in einem offenen Kreislauf angeordnet, mit einem Tank 40, in den die Rückführleitung 36 mündet, und von dem sich eine Saugleitung 42 zur Pumpe 12 erstreckt.

In einem die Pumpe 12 umgehenden und die Druckleitung 14 mit der Saugleitung 42 verbindenden Bypass 44 ist ein Druckbegrenzungsventil 46 in Form eines Rückschlagventils angeordnet. Oberhalb eines bestimmten Druckes ermöglicht das Druckbegrenzungsventil 46 einen Rückfluss von der Druckleitung 14 zur Saugseite der Pumpe 12. Die Pumpe 12 und das Druckbegrenzungsventil 46 können eine Baueinheit 48 bilden. Das Druckbegrenzungsventil 46 kann dabei in die Pumpe 12 integriert sein.

Zwischen den Verbindungen des Bypasses 44 und der Druckzweigleitung 14a kann ein Rückschlagventil 50 in der Druckleitung 14 angeordnet sein, das in Förderrichtung in der Druckleitung 14 öffnet und in entgegengesetzter Richtung sperrt.

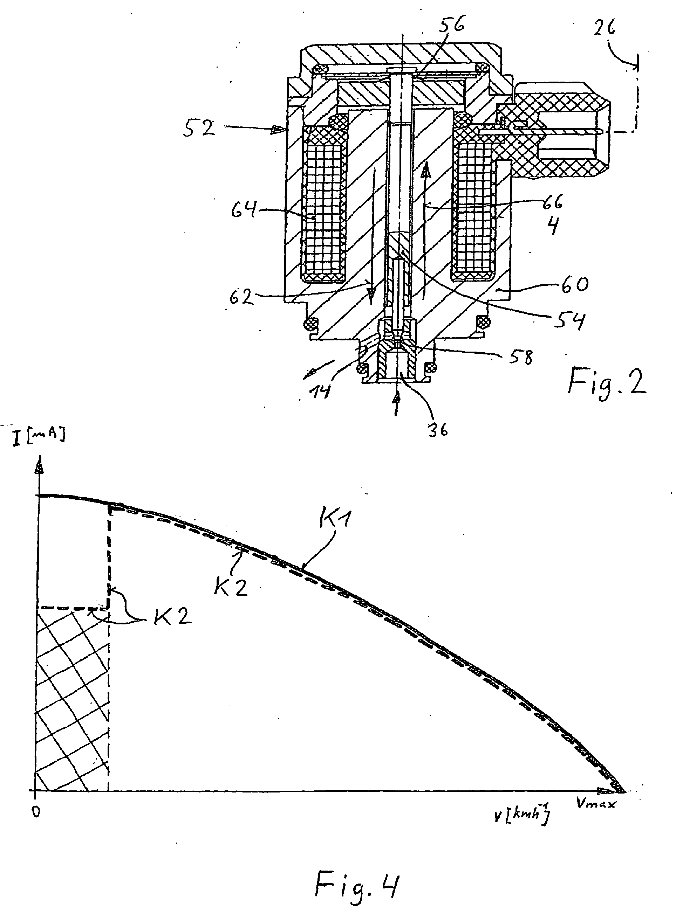

Die Drosselvorrichtung 16 kann durch ein Elektromagnetventil 52 (Fig. 2) mit einem Ventilschieber 54 gebildet sein, der durch eine Feder 56 in seine Offenstellung vorgespannt ist. In der Offenstellung schließt der Ventilschieber 54 eine Ventilöffnung 58 im Ventilkörper 60 des Ventils 52 und ist durch die als Pfeil 62 verdeutlichte Kraft einer Elektromagnetspule 64 gegen die als Pfeil 66 verdeutlichte Kraft der Schließfeder 56 in eine Offenstellung bewegbar. Die Größe der Ventilöffnung 58 ist abhängig von der Öffnungsbewegungsgröße des vorzugsweise kegelförmig angespitzten Wirkendes des Ventilschiebers 54. Durch eine Steuerung der die Elektromagnetspule 64 beaufschlagenden Stromstärke lässt sich die Öffnungskraft 62 und somit auch die Öffnungsstellung des Ventilschiebers 54 steuern. Die Öffnungsstellung ergibt sich jeweils aus dem Gleichgewicht der Kräfte 62, 66. Beim Ausführungsbeispiel gemäß Fig. 2 verläuft die Druckleitung 36 im Ventilkörper 60.

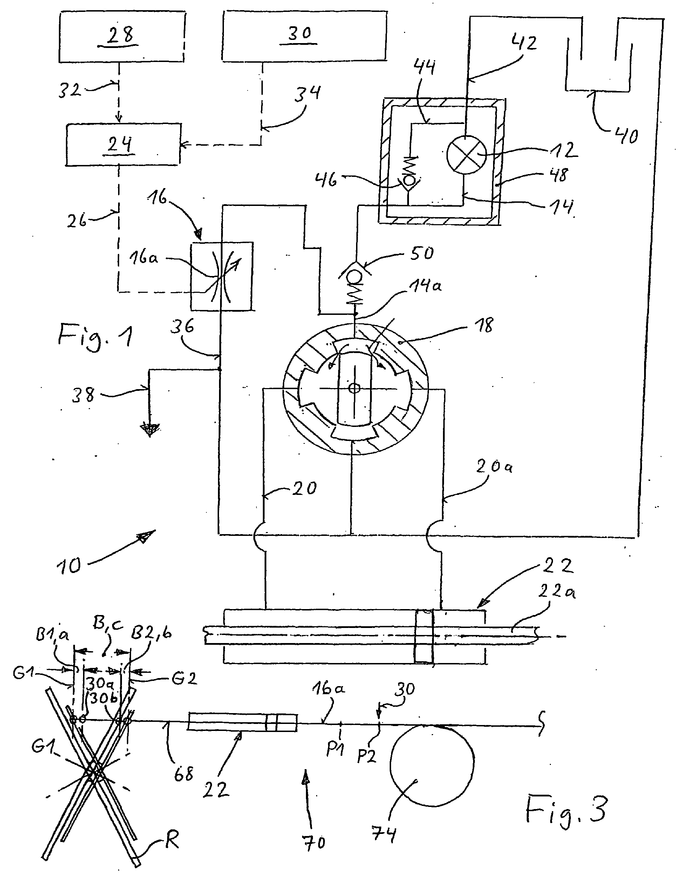

Fig. 1 zeigt eine Prinzipdarstellung des Lenkventils 18 in einer Stellung, in der das Lenkhilfeelement 22a bzw. ein Verbindungslenker 68 der Lenkung 70 sich gemäß Fig. 3 an der Bewegungsgrenze G1 bzw. G2, nämlich einem sogenannten Lenkanschlag, eines Bewegungsbereichs B befindet. Der Bewegungsbereich B erstreckt sich zwischen den maximalen Auslenkstellungen der Räder, von denen das linke Rad R in Fig. 3 angedeutet ist. An den Bewegungsgrenzen G1, G2 ist das Lenkventil 18 geschlossen, wobei nur Lecköl das Lenkventil 18 passieren kann.

Es können ein oder zwei Lenkbewegungssensoren 30a, 30b vorgesehen sein, die jeweils ermitteln, wenn beim Auslenken das Lenkhilfeelement 16a oder die Lenkung in einen Grenzbereich B1, B2 gelangt. Z. B. kann jeweils ein Sensor 30a, 30b sich in einem geringen Abstand a, b vor der zugehörigen Lenkbewegungsgrenze G1, G2 befinden.

Es ist aber auch möglich, gemäß Fig. 3, nur einen alternativ dargestellten Bewegungssensor 30 vorzusehen, der auf zwei Messpunkte P1, P2 am Lenkhilfeelement 16a oder einem damit verbundenen Teil der Lenkung 70 reagiert, wobei die Messpunkte P1, P2 einen Abstand voneinander aufweisen, der dem Abstand zwischen den Grenzbereichen G1, G2 entspricht. Ein Bewegungssensor kann auch als Drehwinkelmesser dem Lenkrad 74 zugeordnet sein.

Die einander gleichen Abstände a, b betragen z. B. etwa 1/40 bis 1/10, insbesondere etwa 1/30 bis 1/20, der gesamten Bewegungslänge c des Bewegungsbereichs B zwischen den maximalen Auslenkstellungen der Räder.

Im folgenden wird die Funktion der Lenkhilfevorrichtung 10 beschrieben.

Im Stand des Fahrzeugs, dass heißt bei Geschwindigkeit 0, ist die Drosselvorrichtung 16 ganz geschlossen, wobei das Steuergerät 24 eine maximale Stromstärke I, z. B. etwa 864 mA, für das Elektromagnetventil 52 steuert und die Drossel 16a geschlossen ist. Mit zunehmender Fahrgeschwindigkeit v verringert das Steuergerät 24 die das Elektromagnetventil 52 beaufschlagende Stromstärke I, so dass die Drosselvorrichtung 16 zunehmend öffnet. Bei maximaler Fahrgeschwindigkeit v max ist die Drosselvorrichtung 16 durch die Kraft 66 der Feder 56 ganz geöffnet.

Wenn sich jedoch die Lenkung 70 bzw. das Lenkhilfeelement 22a bei einer Auslenkbewegung der zugehörigen Lenkbewegungsgrenze G1 bzw. G2 nähert, vermindert das Steuergerät 24 auf eine Signalgabe des zugehörigen Bewegungssensors hin die Stromstärke, z. B. um etwa 30 bis 40% auf z. B. etwa 500 mA. Hierdurch gibt die Drosselvorrichtung 16 einen Teilquerschnitt der Druckleitung 14 frei, wobei der Druck gemäß der gestrichelten Kurve K2 sinkt und eine gewisse Menge des vorhandenen Fluids den Teilquerschnitt passieren kann. Dieser Teilquerschnitt bleibt im jeweiligen Grenzbereich B1 bzw. B2 offen.

Bei einer Lenkung 70 mit einem andeutungsweise dargestellten Lenkrad 74 mit einem maximalen Drehwinkelbereich von etwa 500° können die Grenzbereiche B1, B2 jeweils einem Drehwinkel des Lenkrads 74 von etwa 20 bis 30 ° vor der zugehörigen Bewegungsgrenze G1 bzw. G2 entsprechen.

Die Lenkhilfevorrichtung 10 ist vorzugsweise für ein hydraulisches Fluid, vorzugsweise Öl, eingerichtet, kann jedoch auch für ein gasförmiges Fluid, insbesondere Luft, ausgebildet sein.

### B E Z U G S Z E I C H E N L I S T E

- 10: Lenkhilfevorrichtung
- 12: Lenkhilfepumpe
- 14: Druckleitung
- 14a: Druckzweigleitung
- 16: Drosselvorrichtung
- 16a: Drossel
- 18: Lenkventil
- 20: Steuerleitung
- 22: Lenkhilfemotor
- 22a: Lenkhilfeelement
- 24: Steuervorrichtung
- 26: Steuerleitung
- 28: Fahrgeschwindigkeitssensor
- 30: Lenkbewegungssensor
- 30a: Lenkbewegungssensor
- 30b: Lenkbewegungssensor
- 32: Signalleitung
- 34: Signalleitung
- 36: Rückführleitung
- 38: Zweigleitung
- 40: Tank
- 42: Saugleitung
- 44: Bypass
- 46: Druckbegrenzungsventil
- 48: Baueinheit
- 50: Rückschlagventil
- 52: Elektromagnetventil
- 54: Ventilschieber
- 56: Feder
- 58: Ventilöffnung
- 60: Ventilkörper
- 62: Kraftpfeil
- 64: Elektromagnetspule
- 66: Kraftpfeil
- 68: Verbindungslenker
- 70: Lenkung
- 72: Rad
- 74: Lenkrad

- a: Abstand
- b: Abstand
- c: Bewegungslänge
- B: Bewegungsbereich
- B1: Grenzbereich
- B2: Grenzbereich
- K1: Kurve
- K2: Kurve
- G1: Lenkbewegungsgrenze
- G2: Lenkbewegungsgrenze
- P1: Messpunkt
- P2: Messpunkt
- R: Rad

## Patentansprüche

1. Lenkhilfevorrichtung (10) für ein Fahrzeug, insbesondere für ein Kraftfahrzeug mit Rädern, mit einer Pumpe (12), einer verstellbaren Drosselvorrichtung (16) zum Steuern des Volumenstroms in einer Druckleitung (14) der Pumpe (12), einem Lenkventil (18), das stromauf der Drosselvorrichtung (16) mit der Druckleitung (14 verbunden ist und durch wenigstens eine Steuerleitung (26) mit einem Lenkhilfemotor (22) mit einem Lenkhilfeelement (22a) verbunden ist, das Lenkhilfebewegungen ausführt, und einer Steuervorrichtung (24), die die Drosselvorrichtung (16) mit zunehmender Fahrgeschwindigkeit des Fahrzeugs verstellt, **dadurch gekennzeichnet, dass** die Drosselvorrichtung (16) im Anfangsbereich der Fahrgeschwindigkeit (v) und dann, wenn das Lenkhilfeelement (16a) sich in einer Stellung befindet, die einem Grenzbereich (B1, B2) einer maximalen Lenkbewegung entspricht, einen Teilquerschnitt der Druckleitung (14) freigibt.

2. Lenkhilfevorrichtung nach Anspruch 1, **dadurch gekennzeichnet, dass** im Anfangsbereich der Fahrgeschwindigkeit die Drosselvorrichtung (16) den Teilquerschnitt nur in den Grenzbereichen (B1, B2) freigibt und im Bereich zwischen den Grenzbereichen (B1, B2) schließt und mit zunehmender Fahrgeschwindigkeit zunehmend öffnet.

3. Lenkhilfevorrichtung nach Anspruch 1 oder 2, **dadurch gekennzeichnet, dass** die Drosselvorrichtung (16) durch eine verstellbare Drossel (16a) gebildet ist.

4. Lenkhilfevorrichtung nach Anspruch 3, **dadurch gekennzeichnet, dass** die Drossel (16a) durch ein Elektromagnetventil (52) gebildet ist.

5. Lenkhilfevorrichtung nach Anspruch 4, **dadurch gekennzeichnet, dass** ein Ventilschieber (54) des Elektromagnetventils (52) durch eine Feder (56) in seine Offenstellung vorgespannt ist und durch die Kraft (62) eines Elektromagnets gegen die Kraft der Feder (56) in der Richtung auf seine Schließstellung bewegbar ist.

6. Lenkhilfevorrichtung nach Anspruch 4 oder 5, **dadurch gekennzeichnet, dass** zum Einstellen des Teilquerschnitts die Steuervorrichtung (24) die Stromstärke des das Elektromagnetventil (52) beaufschlagenden Stromes senkt.

7. Lenkhilfevorrichtung nach einem der vorangehenden Ansprüche, **dadurch gekennzeichnet, dass** wenigstens ein Sensor (30; 30a, 30b) vorgesehen ist, der bei einer Bewegung des Lenkhilfeelements (16a) oder eines damit verbundenen Bauteils in eine dem jeweiligen Grenzbereich entsprechende Stellung der Steuervorrichtung (24) ein Signal zum Freigeben des Teilquerschnitts der Druckleitung (14) übermittelt.

8. Lenkhilfevorrichtung nach Anspruch 7, **dadurch gekennzeichnet, dass** der Sensor (30a, 30b) so angeordnet ist, dass er das Signal übermittelt, bevor das Lenkhilfeelement (16a) bzw. das damit verbundene Bauteil die Lenkbewegungsgrenze (G1, G2) erreicht.

9. Lenkhilfevorrichtung nach einem der vorangehenden Ansprüche, **dadurch gekennzeichnet, dass** die Bewegungslänge (a, b) der Grenzbereiche (B1, B2) jeweils etwa 1/40 bis 1/10, insbesondere etwa 1/30 bis 1/20, der Bewegungslänge (c) des gesamten Lenkbewegungsbereichs (B) beträgt.

10. Lenkhilfevorrichtung nach einem der vorangehenden Ansprüche, **dadurch gekennzeichnet, dass** bei einer Lenkung (70) mit einem Lenkrad (74) die Bewegungslänge (a, b) der Grenzbereiche (B1, B2) einem Drehwinkel des Lenkrads (74) von etwa 10° bis etwa 40°, insbesondere von etwa 20° bis etwa 30° entspricht.

11. Lenkhilfevorrichtung nach einem der vorangehenden Ansprüche 10, **dadurch gekennzeichnet, dass** die Steuervorrichtung (24) ein elektronisches Steuerprogramm aufweist.

## Claims

1. Power steering device (10) for a vehicle, more particularly for a wheeled motor vehicle, with a pump (12), an adjustable throttle device (16) for controlling the volumetric flow in a pressure pipe (14) of the pump (12), a steering valve (18) which is connected to the pressure pipe (14) upstream of the throttle device (16) and is connected by at least one control pipe (26) to a power steering motor (22) featuring a power steering element (22a) which executes power steering movements, and with a control device (24) which adjusts the throttle device (16) as the vehicle increases its travelling speed, **characterised in that** in the initial travelling speed range (v) and when the power steering element (16a) is in a setting that corresponds to a maximum steering movement threshold range (B1, B2), the throttle device (16) uncovers a partial cross-section of the pressure pipe (14).

2. Power steering device according to claim 1, **characterised in that** in the initial travelling speed range the throttle device (16) uncovers the partial cross-section only in the threshold ranges (B1, B2), and in the zone between the threshold ranges (B1, B2) closes it and opens it increasingly as the travelling speed increases.

3. Power steering device according to claim 1 or 2, **characterised in that** the throttle device (16) is constituted by an adjustable choke (16a).

4. Power steering device according to claim 3, **characterised in that** the choke (16a) is constituted by an electromagnetic valve (52).

5. Power steering device according to claim 4, **characterised in that** a valve slide (54) on the electromagnetic valve (52) is pre-tensioned in its open position by a spring (56) and through the force (62) of an electromagnet is adapted to be moved against the force of the spring (56) in the direction of its closed position.

6. Power steering device according to claim 4 or 5, **characterised in that** in order to set the partial cross-section the control device (24) lowers the amperage of the current that is acting upon the electromagnetic valve (52).

7. Power steering device according to any one of the preceding claims, **characterised in that** at least one sensor (30; 30a; 30b) is provided which, in the case of a movement of the power steering element (16a) or a component linked thereto into a setting of the control device (24) that corresponds to the respective threshold range, communicates a signal to uncover the partial cross-section of the pressure pipe (14).

8. Power steering device according to claim 7, **characterised in that** the sensor (30a, 30b) is arranged in such a way that it communicates the signal before the power steering element (16a) or the component linked thereto reaches the steering movement threshold (G1, G2).

9. Power steering device according to any one of the preceding claims, **characterised in that** the kinetic length (a, b) of the threshold ranges (B1, B2) is in each case approx. 1/40 to 1/10, more particularly approx. 1/30 to 1/20, of the kinetic length (c) of the overall steering movement range (B).

10. Power steering device according to any one of the preceding claims, **characterised in that** in the case of a steering system (70) with a steering wheel (74) the kinetic length (a, b) of the threshold ranges (B1, B2) corresponds to a turning angle of the steering wheel (74) of approx. 10° to approx. 40°, more particularly of approx. 20° to approx. 30°.

11. Power steering device according to any one of the preceding claims, **characterised in that** the control device (24) incorporates an electronic control program.

## Revendications

1. Dispositif d'assistance de direction (10) pour un véhicule, en particulier pour un véhicule automobile à roues, avec une pompe (12), un dispositif d'étranglement réglable (16) pour commander le flux volumique dans une conduite de refoulement (14) de la pompe (12), une valve de direction (18) qui est reliée à la conduite de refoulement (14) en amont du dispositif d'étranglement (16) et, par au moins une conduite de commande (26) à un moteur d'assistance de direction (22) doté d'un élément d'assistance de direction (22a) qui effectue des mouvements d'assistance de direction, et un dispositif de commande (24) qui ajuste le dispositif d'étranglement (16) à mesure que la vitesse de marche du véhicule automobile augmente, **caractérisé en ce que** dans la plage de départ de la vitesse de marche (v) et, ensuite lorsque l'élément d'assistance de direction (16a) se trouve dans une position qui correspond, dans une plage limite (B1, B2), à un mouvement de braquage maximal, le dispositif d'étranglement (16) libère une section transversale partielle de la conduite de refoulement (14).

2. Dispositif d'assistance de direction selon la revendication 1, **caractérisé en ce que** dans la plage de départ de la vitesse de marche, le dispositif d'étranglement (16) ne libère la section transversale partielle que dans les plages limites (B1, B2) et la ferme dans la plage située entre les plages limites (B1, B2) et l'ouvre de plus en plus à mesure que la vitesse de marche augmente.

3. Dispositif d'assistance de direction selon la revendication 1 ou 2, **caractérisé en ce que** le dispositif d'étranglement (16) est formé par un étranglement réglable (16a).

4. Dispositif d'assistance de direction selon la revendication 3, **caractérisé en ce que** l'étranglement (16a) est formé par un électromagnétique (52).

5. Dispositif d'assistance de direction selon la revendication 4, **caractérisé en ce qu'**un coulisseaux vanne (54) de la vanne électromagnétique (52) est précontraint dans sa position ouverte par un ressort (56) et peut être déplacé dans le sens de sa position de fermeture par la force (62) d'un électroaimant contre la force du ressort (56).

6. Dispositif d'assistance de direction selon la revendication 4 ou 5, **caractérisé en ce que** le dispositif de commande (24) réduit l'intensité de courant du courant appliqué sur la vanne électromagnétique (52) pour régler la section transversale partielle.

7. Dispositif d'assistance de direction selon une des revendications précédentes, **caractérisé en ce qu'**est prévu au moins un capteur (30 ; 30a, 30b) qui transmet un signal de libération de la section transversale partielle de la conduite de refoulement (14) en cas de mouvement de l'élément d'assistance de direction (16a) ou d'un composé qui y est relié dans une position du dispositif de commande (24) correspondant à chaque plage limite.

8. Dispositif d'assistance de direction selon la revendication 7, **caractérisé en ce que** le capteur (30a, 30b) est disposé de manière à transmettre le signal avant que l'élément d'assistance de direction (16a) ou respectivement le composant qui y est relié atteigne la limite de mouvement de braquage (G1, G2).

9. Dispositif d'assistance de direction selon une des revendications précédentes, **caractérisé en ce que** la longueur de mouvement (a, b) des plages limites (B1, B2) correspond respectivement à environ 1/40 à 1/10, en particulier à environ 1/30 à 1/20, de la longueur de mouvement (c) de l'ensemble de la plage de mouvement de braquage (B).

10. Dispositif d'assistance de direction selon une des revendications précédentes, **caractérisé en ce que**, lors d'un braquage (70) avec un volant (74), la longueur de mouvement (a, b) des plages limites (B1, B2) correspond à un angle de rotation du volant (74) d'environ 10° à environ 40°, en particulier d'environ 20° à environ 30°.

11. Dispositif d'assistance de direction selon une des revendications précédentes, **caractérisé en ce que** le dispositif de commande (24) comporte un programme de commande électronique.
